# EUROPÄISCHE PATENTSCHRIFT

(11) **EP 0 764 334 B1**
(45) Veröffentlichungstag und Bekanntmachung des Hinweises auf die Patenterteilung: **05.06.2002**
(21) Anmeldenummer: 96911970.0
(22) Anmeldetag: 29.03.1996
(51) Int. Cl.: H01C 3/12, H05K 3/20

(54) **VERFAHREN ZUR HERSTELLUNG VON BAUELEMENTEN AUF METALLFILMBASIS**
PROCESS FOR MANUFACTURING COMPONENTS ON A METAL FILM BASE
PROCEDE DE FABRICATION DE COMPOSANTS A BASE DE FILM METALLIQUE

(30) Priorität: 05.04.1995 DE 19512813
(43) Veröffentlichungstag der Anmeldung: 26.03.1997
(73) Patentinhaber: SENSOTHERM TEMPERATURSENSORIK GmbH, 90441 Nürnberg (DE)
(72) Erfinder: ZITZMANN, Heinrich, D-91207 Lauf (DE)
(74) Vertreter: Schoppe, Fritz, Dipl.-Ing.
(86) Internationale Anmeldenummer: EP9601396
(87) Internationale Veröffentlichungsnummer: WO9631887

(56) Entgegenhaltungen:
- DE-A- 2 302 615
- DE-A- 2 507 731
- DE-A- 3 927 735
- DE-A- 4 113 483
- DE-A- 4 218 938
- FR-A- 2 344 940
- US-A- 4 053 977
- US-A- 4 568 413
- ELEKTROTECHNIK UND INFORMATIONSTECHNIK, 1990, AUSTRIA, Bd. 107, Nr. 5, ISSN 0932-383X, Seiten 271-275, XP000125842 LUDER E ET AL: "Sensoren in Schichttechnik" in der Anmeldung erwähnt

## Beschreibung

Die vorliegende Erfindung bezieht sich auf ein Herstellungsverfahren von Bauelementen auf Metallfilmbasis und insbesondere auf ein Herstellungsverfahren von Bauelementen, die aus einem Metallfilm, der auf einen Träger aufgebracht ist, bestehen.

Typische Bauelemente der oben genannten Art sind Sensoren, wie z.B. Platintemperatursensoren, in Folienausführung, die allgemein bekannt sind und in unterschiedlichen Anwendungen eingesetzt werden. Die bekannten Platintemperatursensoren sind derart aufgebaut, daß ein dünner Platindraht mäanderförmig auf eine Trägerfolie, die z.B. aus Kapton besteht, aufgeklebt ist. Diese Herstellung eines solchen Sensors ist mit einem hohen Arbeitsaufwand verbunden. Weitere Einschränkungen und Nachteile ergeben sich dadurch, daß die verarbeitbaren Drahtdicken selbst bei relativ großen Folienabmessungen, im Bereich einiger Quadratzentimeter, nur niedrige Widerstandswerte, im Bereich von 100 Ohm oder kleiner, ermöglichen. Außerdem sind kleine Abmessungen, z.B. < 1 cm², mit üblichen Widerstandswerten im Bereich von 100 Ohm überhaupt nicht realisierbar.

Es ist bekannt, Folien-Temperatursensoren mit unedlen Metallen, wie z.B. Nickel, herzustellen, da sich in diesem Fall die Metallfilme nach der Beschichtung auf die Trägerfolie mit üblichen Verfahren strukturieren lassen. Solche Verfahren schließen die Photoresisttechnik und chemisches Ätzen ein. Der Nachteil hierbei besteht darin, daß die Kennlinie der so hergestellten Temperatursensoren nicht dem weit verbreiteten Standard DIN IEC entspricht. Desweiteren weisen unedle Metalle nicht die hohe Langzeitstabilität von Platin auf.

Platintemperatursensoren müssen, um bezüglich ihrer Kennlinie, die durch ihren Widerstand bei 0° Celsius, Rₒ, und den Temperaturkoeffizienten des Widerstands, TK, charakterisiert ist, eine gewünschte Stabilität aufzuweisen, während und/oder nach dem Herstellen des Platinfilms Temperaturbehandlungen bei hohen Temperaturen, möglichst über 1000° Celsius, unterzogen werden.

Eine mit einem Metallfilm beschichtete Folie kann jedoch dieser Behandlung nicht unterzogen werden, da die Trägerfolien, die aus Kapton, isolierend beschichteten Metallfolien, Glasfolien, usw. bestehen, bei diesen hohen Temperaturen zerstört werden würden. Desweiteren ist die Strukturierung eines Platinfilms, der auf eine Folie aufgebracht ist, problematisch, da das Edelmetall Platin nur mit sehr agressiven Medien ätzbar ist. Ferner ist bei einem Folienträger der notwendige Trimmprozeß zum Abgleich der Widerstände auf die gewünschten Sollwerte, der z.B. mittels einer Laserbestrahlung durchgeführt wird, schwierig.

Die DE 25 07 731 B2 offenbart einen Meßwiderstand, der aus einem Isolierkörper als Träger und einer dünnen Platinschicht als Widerstandsmaterial besteht. Dieser Meßwiderstand wird hergestellt, indem eine dünne Platinschicht durch Kathodenzerstäubung in einer sauerstoffhaltigen Atmosphäre auf den Träger aufgebracht und nachfolgend getempert wird. Bei dem in dieser Schrift offenbarten Verfahren muß der Träger die bei der Temperung auftretenden hohen Temperaturen aushalten.

Die DE 41 13 483 beschreibt ein Verfahren zur Erzeugung feiner Leiterbahnen. Gemäß einem Ausführungsbeispiel offenbart die genannte Schrift ein Verfahren, bei dem ein Pulver aus elektrisch leitfähigem Material auf klebrige Bereiche, die einem Leiterbahnmuster entsprechen, einer Hilfsoberfläche aufgebracht wird. Das Pulver wird nachfolgend gebrannt, wodurch Leiterbahnen entstehen, die nur schwach an der Hilfsoder Zwischenträger-Oberfläche haften. Im Anschluß wird der endgültige Träger unter Druck auf das gebrannte Leiterbahnmuster aufgebracht, woraufhin der Träger von der Hilfsoberfläche getrennt wird, wobei das elektrisch leitfähige Material am Träger haften bleibt.

Bei G. Seidel "Gedruckte Schaltungen", Verlag Technik, Berlin, Berliner Union, Stuttgart, 1959, sind unterschiedliche Arten der Herstellung für gedruckte Schaltungen offenbart. Dabei werden beispielsweise verschiedene Drucktechniken, Galvanisierungstechniken sowie Folienätzverfahren beschrieben.

Die DE 39 27 735 A1 offenbart ein Strahlungsthermometer, das aus einem auf eine Kunststoff-Folie aufgebrachten mäanderförmigen Dünnschichtwiderstand besteht. Die DE 23 02 615 B2 zeigt einen temperaturabhängigen elektrischen Widerstand sowie ein Verfahren zu dessen Herstellung. Dieser Widerstand besteht aus einer mäanderförmigen Leiterbahn mit einem von Null verschiedenen Temperaturkoeffizienten, die auf einer dünnen isolierenden Folie angeordnet ist, welche auf einem Stab mit zylindrischer Oberfläche angebracht ist.

In "e&i", 107. Jg. (1990), H.5, S. 271 bis 275, sind unterschiedliche Bauelemente, die mittels Dickschicht oder Dünnschicht-Technik hergestellt sind, erläutert. In "etz", Band 109 (1988), H.11, S. 502 bis 507, sind Dünn- und Dickschichttechnologien für die Sensorik beschrieben.

Die DE 42 18 938 A1 offenbart ein Verfahren zur Herstellung von Widerstandselementen, bei dem eine Widerstandsbahn in Form einer polymerisierbaren elektrisch leitfähigen Paste auf einen Träger aufgebracht und der beschichtete Träger zwecks Polymerisation der Paste durch einen Infrarotofen hindurchgeführt wird. Anschließend wird ein Kunststoffkern auf den beschichteten Träger aufgepreßt und der Träger vom Kunststoffkern getrennt, wobei die sich aus der leitfähigen Paste ergebende Widerstandsbahn in dem Kunststoffkern verbleibt. Die DE-Patentanmeldung S 39 021 VIb/32b, Anmeldetag 5. Mai 1954, bekanntgemacht am 20. Oktober 1955, offenbart ein Verfahren zur Erhöhung der Haftfestigkeit von Metallbelägen auf Glas oder Keramik.

Die FR-A-2344940 betrifft ein Verfahren zur Herstellung von elektrischen Widerständen bei dem eine Widerstandsstruktur mittels elektrolytischem Ätzen erzeugt wird.

Ausgehend von diesem Stand der Technik liegt der vorliegenden Erfindung die Aufgabe zugrunde, ein Verfahren zur Herstellung eines Bauelements auf Metallfilmbasis zu schaffen, dessen Kennlinie einer gewünschten Charakteristik entspricht.

Diese Aufgabe wird durch ein Verfahren gemäß Patentanspruch 1 und durch ein Verfahren gemäß Patentanspruch 2 gelöst.

Die vorliegende Erfindung beruht auf der Idee, den Metallfilm bis zu einem gewissen Fertigungsschritt in einer bekannten Dünnschicht- bzw. Dickschicht-Technik auf einem üblichen Trägermaterial, das hierin als erster Träger bezeichnet wird, herzustellen, den bereits getemperten und in der Regel strukturierten und getrimmten Metallfilm mitsamt des ersten Trägers auf einen zweiten Träger zu übertragen und dann den ersten Träger abzulösen.

Der zweite Träger kann als neuer Träger für den Metallfilm oder nur als Übertragungsmedium für die Übertragung des Metallfilms auf einen anderen Träger dienen.

Weiterbildungen der vorliegenden Erfindung sind in den abhängigen Ansprüchen aufgeführt.

Bevorzugte Ausführungsbeispiele der vorliegenden Erfindung werden nachfolgend unter Bezugnahme auf die beiliegenden Zeichnungen näher erläutert. Es zeigen:
- Fig. 1A bis 1C: verschiedene Verfahrensschritte bei der Herstellung eines Metallfilm-Bauelements gemäß der vorliegenden Erfindung;
- Fig. 2A, 2B und 3: verschiedene Ausführungsbeispiele von Metallfilm-Bauelementen, die gemäß der vorliegenden Erfindung hergestellt sind;
- Fig. 4: ein zylinderförmiges Bauelement, sowie die Bestandteile, die bei der Herstellung desselben verwendet sind; und
- Fig. 5: eine detaillierte Metallfilm-Struktur, bei der Trimmstrecken markiert sind.

Das Herstellungsverfahren gemäß der vorliegenden Erfindung wird nun anhand eines bevorzugten Ausführungsbeispiels näher erläutert.

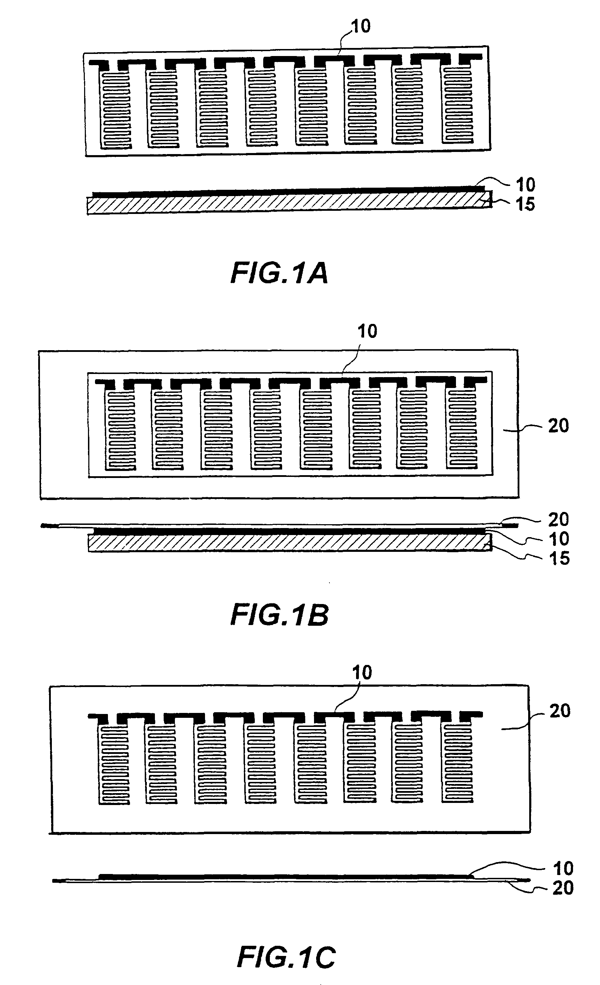

Die Fig. 1A bis 1C zeigen jeweils eine Draufsicht und eine Seitenansicht eines Platinfilm-Bauelements nach verschiedenen Verfahrensschritten. Wie in Fig. 1A gezeigt ist, wird ein Platinfilm 10 auf einen ersten Träger 15, der z.B. ein Keramiksubstrat ist, aufgebracht. Anstelle des Keramiksubstrats könnte auch ein Glassubstrat oder ein geeignetes anderes Trägermaterial verwendet werden. Der Platinfilm wird mittels einer bekannten Dünnschicht- bzw. Dickschicht-Technik auf den ersten Träger aufgebracht.

Nach dem Aufbringen wird der Platinfilm 10 strukturiert. Diese Strukturierung kann Temperaturbehandlungen bei hohen Temperaturen (Temperprozesse), Ionenstrahlätz-Verfahren zum Strukturieren des Platinfilms und Laserbestrahlungen zum Trimmen des Platinfilms, z.B. um die Widerstände auf die gewünschten Sollwerte abzugleichen, einschließen.

Insbesondere durch die Temperaturbehandlungen besitzt der Platinfilm bezüglich des ersten Trägers eine gewisse Haftung, die bei dem bevorzugten Ausführungsbeispiel durch einen speziellen Verfahrensschritt wesentlich gemindert wird. Hierzu wird der erste Träger 15 mit dem fertig strukturierten Platinfilm 10 in eine elektrisch leitende Lösung gebracht. Die elektrisch leitende Lösung ist eine wässrige Elektrolytlösung. Vor dem Einbringen des ersten Trägers 15 mit dem Platinfilm 10 in die elektrisch leitende Lösung wird der Platinfilm 10 hierbei elektrisch leitend kontaktiert und bildet somit eine erste Elektrode. Ferner wird eine zweite Elektrode in die Lösung eingebracht.

Danach wird eine geeignete Spannung zwischen den beiden Elektroden angelegt und damit ein entsprechender Strom in dem elektrochemischen Kreis erzeugt. Dadurch bildet sich an dem Platinfilm 10 eine Wasserstoff-Gasbildung, durch die die Haftung des Platinfilms 10 an dem ersten Träger 15 gelockert wird. Vorzugsweise wird der Platinfilm 10 anschließend in einem Spülvorgang von der chemischen Lösung gereinigt und danach getrocknet.

Die genannte elektrisch leitfähige Lösung ist eine wässrige Elektrolyt-Lösung.

Es sei darauf hingewiesen, daß Elektrolyte allgemein wie auch im Sinne der Verwendung dieses Begriffs in dem vorliegenden Text einen Oberbegriff für Stoffe darstellen, welche durch elektrolytische Dissoziation in Stoffe gespalten werden und demzufolge in der Schmelze und in Lösungen elektrischen Strom leiten. Zu den Elektrolyten gehören somit Salze, Säuren und Basen. Man unterscheidet die echten Elektrolyte, die bereits in Form von Ionen, wie z.B. NaCl vorliegen, bevor sie schmelzen oder in Lösung gehen, und die potentiellen Elektrolyte, welche erst Ionen bilden, wenn sie in Lösung gehen, wie z.B. HCl.

Bei der Elektrolyse einer wässrigen Lösung, die im vorliegenden Fall stattfindet, kann außer den gelösten Elektrolyten auch das Wasser an den Elektrodenvorgängen beteiligt sein. Hierbei entsteht an der Kathode, also dem Minuspol, Wasserstoff, während an der Anode, also dem Pluspol, je nach dem verwendeten Elektrolyt Chlor oder Sauerstoff entsteht.

Aus Experimenten hat sich ergeben, daß eine Haftungslockerung des Metallfilms vom Substrat in beiden Polungsarten auftritt, nämlich im Falle des Metallfilms oder Platinfilms als Kathode oder als Anode. Dies bedeutet auch, daß nicht nur bei Bildung von Wasserstoff am Metallfilm, also bei dessen Polung als Kathode, sondern auch bei Bildung von Sauerstoff oder Chlor am Metallfilm, also bei dessen Polung als Anode, eine Lockerung des Metallfilms 10 gegenüber dem Träger 15 erfolgt.

Als wässrige Elektrolytlösung wird vorzugsweise HCl oder HNO₃ eingesetzt, wobei der Metallfilm 10 als Kathode gepolt wird, um eine Verunreinigung des Metallfilms 10 z.B. durch Natrium bei der Verwendung von NaCl zu vermeiden.

Auf den derart vorbehandelten Metallfilm, der bevorzugt ein Platinfilm 10 ist, wird dann eine Folie 20, die den zweiten Träger darstellt, aufgebracht. Die Folie 20 weist eine gewisse Hafteigenschaft auf, wodurch sich der Platinfilm 10 an der Folie bindet. Danach wird die Folie 20, die den zweiten Träger darstellt, mitsamt des Platinfilms 10 durch Abziehen von dem ersten Träger 15 gelöst (Fig. 1C).

Der zweite Träger ist entsprechend dem bevorzugten Ausführungsbeispiel vorzugsweise eine Folie. Diese Folie besteht vorzugsweise aus einem Kunststoff, wie z.B. Kapton®, Teflon® oder Polyimid. Alternativ kann der zweite Träger aus einer Metallfolie bestehen, die elektrisch isolierend beschichtet ist. Ferner kann der zweite Träger ein spezieller Träger aus Keramik, Glas, passiviertem Silizium, usw., sein.

Der Metallfilm kann flächig in Dünnfilmtechnik auf den ersten Träger aufgebracht werden. Bekannte Verfahren dafür sind Aufdampfen, Aufsputtern, Dünnschichtsiebdruck, usw.. Zur Herstellung der gewünschten Strukturen wird der flächig aufgebrachte Platinfilm dann mit unterschiedlichen Verfahren, z.B. Ionenstrahlätzen, Laserbestrahlung, usw., strukturiert. Diese Vorgehensweise ist vorzugsweise für hochohmige Sensoren auf kleiner Fläche sinnvoll.

Alternativ kann der Metallfilm in Dickschicht- oder Dünnschicht-Siebdrucktechnik als Widerstandsstruktur auf den ersten Träger 15 aufgebracht werden. Dies ist besonders bei großflächigen Sensoren vorteilhaft. Außerdem kann der Platinfilm auch im Zusammenwirken von Dünnschicht- und Dickschicht-Technologie auf dem ersten Träger gebildet werden. Dabei kann die Grundbeschichtung und die Strukturierung in Dünnschichttechnik erfolgen, während eventuell benötigte Kontaktverstärkungen in Dickschichttechnologie durchgeführt werden. Ferner kann der Metallfilm bereits auf dem ersten Träger mit Kontakt-Drähten oder -Bändchen versehen sein, was z.B. bei einer zeilenweisen Anordnung der einzelnen Bauelemente vorteilhaft ist.

Der zweite Träger kann als neuer Träger für die Metallstruktur dienen, wie es bei der Verwendung der Anordnung als Folientemperaturfühler vorteilhaft ist. Alternativ kann derselbe ferner in einer "Abziehbild-" ähnlichen Technik auf einen weiteren Träger übertragen werden. Diese Technik kann bei der Integration in einen Siliziumchip verwendet werden, der den Belastungen beispielsweise der Platinfilmherstellung nicht gewachsen wäre.

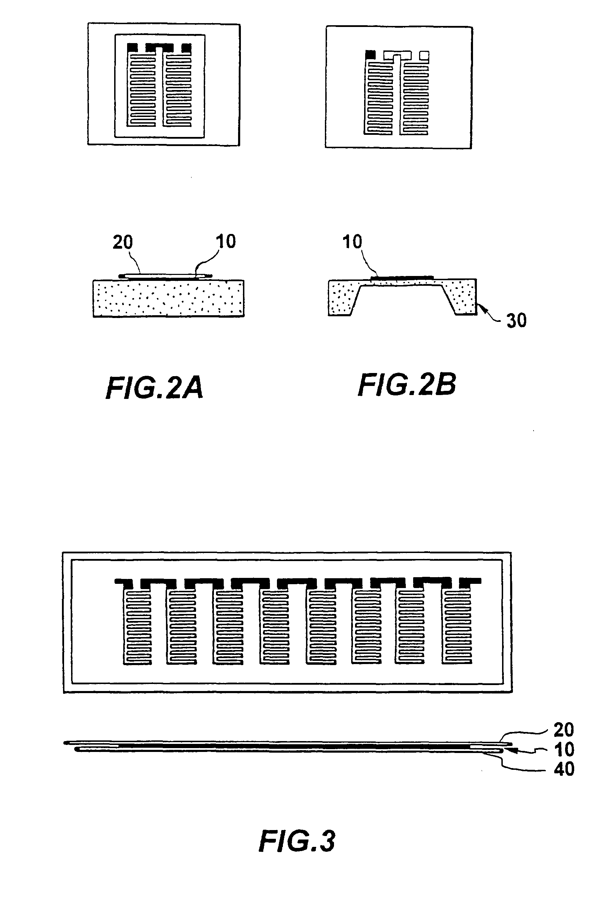

Fig. 2A zeigt ein Metallfilm-Bauelement, bei dem der Metallfilm 10 mitsamt der Folie 20, die den zweiten Träger darstellt, auf einen dritten Träger, der z.B. ein Siliziumchip sein kann oder alternativ aus Glas besteht, aufgebracht ist. Wie in Fig. 2B gezeigt ist, kann nach dem Aufbringen der Kombination aus Metallfilm 10 und Folie 20 diese zweite Folie entfernt werden. Der dritte Träger 30 stellt nun den neuen Träger für den Metallfilm dar. Dieser neue Träger kann nun weiter bearbeitet werden. Z.B. kann der dritte Träger auf der Rückseite geätzt werden, um die Trägerdicke zu verringern (Fig. 2B). Dies ist bei der Erzeugung eines "schnellen" Sensors vorteilhaft, wobei ein solcher z.B. bei der Erfassung von Gasströmungen, wie der Luftmengenmessung in einem Kraftfahrzeug, verwendet wird.

Wurde, wie in Fig. 2B gezeigt ist, nach dem Übertragen des Metallfilms 10 auf einen dritten Träger 30 der zweite Träger 20 entfernt, kann auf dem Platinfilm auf unterschiedliche Weise eine "obere" Schutzschicht aufgebracht werden. Diese Schutzschicht kann z.B. mittels Siebdruck, Besputtern oder in der Form einer Gegenfolie, usw., aufgebracht werden. Ferner kann dieselbe aus unterschiedlichen Materialien bestehen.

Fig. 3 zeigt ein Metallfilm-Bauelement, bei dem der Metallfilm 10 samt der Übertragungsfolie 20, die die zweite Folie darstellt, auf eine Trägerfolie 40 aufgebracht wurde. Auch in diesem Fall kann der zweite Träger, die Übertragungsfolie 20, nach dem Aufbringen des Metallfilms 10 auf die Trägerfolie 40 entfernt oder belassen werden.

Der dritte Träger kann in verschiedenen Formen ausgebildet sein. Bei dem bevorzugten Ausführungsbeispiel ist der dritte Träger (Folie 40) flach und wird einseitig mit dem zu übertragenden Metallfilm beschichtet. Alternativ kann der flache dritte Träger beidseitig beschichtet werden, d.h. auf der Vorder- und der Rückseite. Dabei können auf die Vorder- und die Rückseite gleiche oder unterschiedliche Metallfilme aufgebracht werden. Falls unterschiedlich Metallfilme auf Vorder- und Rückseite aufgebracht werden, können diese sich sowohl Material-mäßig als auch Struktur-mäßig unterscheiden.

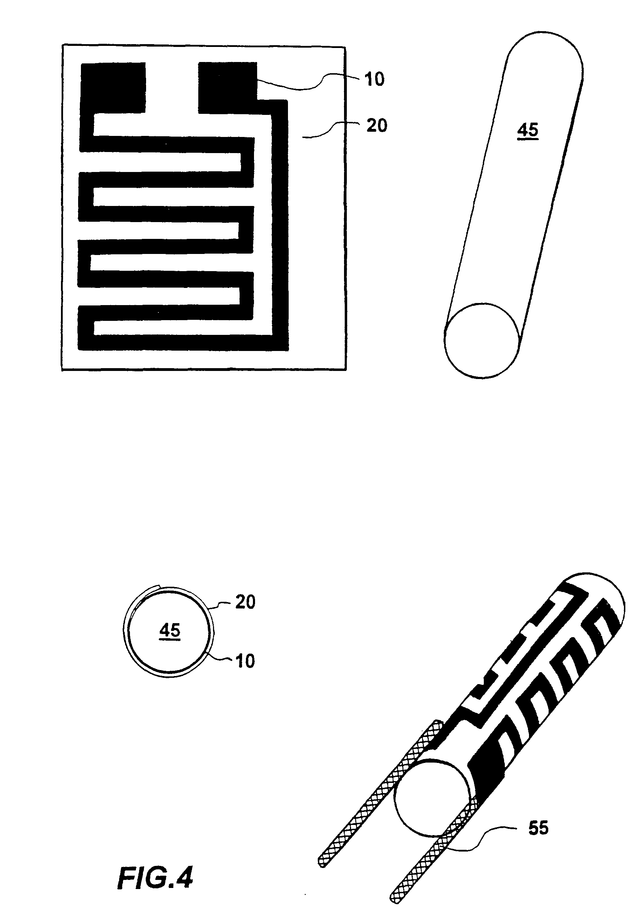

Bei einem weiteren Ausführungsbeispiel, das in Fig. 4 gezeigt ist, weist der dritte Träger eine zylindrische Geometrie auf. In Fig. 4 sind der zylindrische Träger 45, der den dritten Träger darstellt, und die Folie 20, die den zweiten Träger darstellt, mit dem auf die Folie 20 aufgebrachten Metallfilm 10 in einem getrennten und einem zusammengebauten Zustand dargestellt. Im zusammengebauten Zustand ist der Metallfilm derart aufgebracht, daß er die Mantelfläche des zylindrischen Trägers bedeckt. Auch bei diesem Ausführungsbeispiel kann nach dem Aufbringen des Metallfilms auf dem dritten Träger der Metallfilm mit einer äußeren Schutzschicht bedeckt werden, die z.B. die Form eines dünnwandigen Röhrchens hat.

Der dritte Träger und die Schutzschicht können aus gleichen oder unterschiedlichen Materialien bestehen, z.B. Keramik oder Glas. In Fig. 4 ist ferner die radiale Kontaktierung 55 des zylindrischen Elements dargestellt, bei der die Kontakte auf einer Zylinderseite angebracht sind. Alternativ wäre auch eine axiale Kontaktierung möglich, bei der die Kontakte gegenüberliegend angeordnet sind. Ein derartiges zylindrisches Bauelement wir im allgemeinen als Rundfühler bezeichnet.

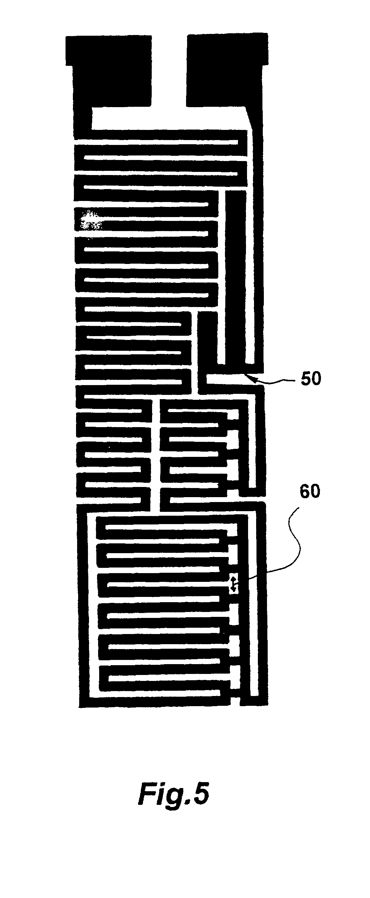

Fig. 5 zeigt detailliert eine Platinfilm-Struktur. Eine derartige Struktur kann während des Schritts des Strukturierens des Metallfilms z.B. durch Ionenstrahlätzen erhalten werden. In der Struktur sind Trimmstellen eingestellt, an denen eine Feintrimmung 50 oder eine Grobtrimmung 60 mittels einer Laserbestrahlung durchgeführt werden kann, um den Widerstand auf den gewünschten Sollwert abzugleichen.

Einzelsensoren, die mittels des Verfahrens der vorliegenden Erfindung hergestellt sind, können aus einem Widerstand (Platintemperaturmeßfühler, Heizelement, usw.) oder aus einer Zusammenschaltung bzw. Kombination mehrerer Einzelelemente bestehen. Z.B. sind bei Strömungssensoren, Gassensoren, Feuchtesensoren, usw. mehrere Einzelelemente erforderlich. Die Abmessungen der Einzelelemente liegen typischerweise zwischen 20 und 50 mm. Allerdings sind auch Abmessungen, die von den Genannten stark abweichen, möglich.

Der Metallfilm kann neben Platin, Rhodium oder Iridium auch aus Platinlegierungen, z.B. Platin/Rhodium, oder aus anderen Metallen, z.B. Nickel, bzw. anderen Metall-Legierungen bestehen.

## Patentansprüche

1. Verfahren zur Herstellung von Bauelementen, die einen Metallfilm auf einem Träger aufweisen, mit folgenden Verfahrensschritten:
Aufbringen eines Metallfilms (10) auf einen ersten Träger (15);
Strukturieren des Metallfilms (10);
Verringern einer Haftwirkung zwischen dem ersten Träger (15) und dem Metallfilm (10) durch folgende Schritte:
elektrisch leitendes Kontaktieren des Metallfilms (10);
Einbringen des ersten Trägers (15) mit dem Metallfilm (10) in eine wässrige Elektrolytlösung;
Einbringen einer Elektrode in die wässrige Elektrolytlösung; und
Elektrolyse der wässrigen Elektrolytlösung durch Anlegen einer Spannung zwischen dem Metallfilm (10) und der Elektrode;
Aufbringen eines zweiten Trägers (20) auf den derart vorbehandelten Metallfilm (10); und
Entfernen des zweiten Trägers (20) mit dem Metallfilm (10) von dem ersten Träger (15).

2. Verfahren zur Herstellung von Bauelementen, die einen Metallfilm auf einem Träger aufweisen, mit folgenden Verfahrensschritten:
Aufbringen eines Metallfilms (10) auf einen ersten Träger (15);
Strukturieren des Metallfilms (10);
Verringern einer Haftwirkung zwischen dem ersten Träger (15) und dem Metallfilm (10) durch folgende Schritte:
elektrisch leitendes Kontaktieren des Metallfilms (10);
Einbringen des ersten Trägers (15) mit dem Metallfilm (10) in eine wässrige Elektrolytlösung;
Einbringen einer Elektrode in die wässrige Elektrolytlösung; und
Elektrolyse der wässrigen Elektrolytlösung durch Anlegen einer Spannung zwischen dem Metallfilm (10) und der Elektrode;
Aufbringen eines zweiten Trägers (20) auf den derart vorbehandelten Metallfilm (10); und
Entfernen des zweiten Trägers (20) mit dem Metallfilm (10) von dem ersten Träger (15); und
Aufbringen des auf den zweiten Träger (20) aufgebrachten Metallfilms (10) auf einen dritten Träger (30; 40; 45).

3. Verfahren gemäß Anspruch 1 oder 2, bei dem der Metallfilm (10) ein Platinfilm ist.

4. Verfahren gemäß Anspruch 1 oder 2, bei dem der Metallfilm (10) ein Rhodiumfilm, ein Iridiumfilm, ein Nickelfilm oder ein Film aus Legierungen dieser Metalle ist .

5. Verfahren gemäß einem der Ansprüche 1 bis 4, bei dem der erste Träger (15) ein Keramiksubstrat oder ein Glassubstrat ist.

6. Verfahren gemäß einem der Ansprüche 1 bis 5, bei dem der zweite Träger (20) eine Kunststoffolie ist.

7. Verfahren gemäß einem der Ansprüche 1 bis 5, bei dem der zweite Träger (20) eine Metallfolie ist, die elektrisch isolierend beschichtet ist.

8. Verfahren gemäß einem der Ansprüche 1 bis 5, bei dem der zweite Träger (20) ein Keramikträger ist.

9. Verfahren gemäß einem der Ansprüche 1 bis 5, bei dem der zweite Träger (20) aus Glas oder passiviertem Silizium besteht.

10. Verfahren gemäß einem der Ansprüche 3 bis 9 in Rückbezug auf Anspruch 2, bei dem der dritte Träger (30; 40) flach ist und wobei auf diesen (30; 40) ein- oder beidseitig ein Metallfilm (10) aufgebracht wird.

11. Verfahren gemäß einem der Ansprüche 6 bis 7 in Rückbezug auf Anspruch 2, bei dem der dritte Träger (45) zylinderförmig ist, wobei der Metallfilm (10) auf der Mantelfläche des Zylinders aufgebracht wird.

12. Verfahren gemäß einem der Ansprüche 3 bis 11 in Rückbezug auf Anspruch 2, bei dem der dritte Träger (30; 40; 45) aus Silizium besteht.

13. Verfahren gemäß einem der Ansprüche 3 bis 11 in Rückbezug auf Anspruch 2, bei dem der dritte Träger (30; 40; 45) aus Glas besteht.

14. Verfahren gemäß einem der Ansprüche 3 bis 13 in Rückbezug auf Anspruch 2, bei dem nach dem Schritt des Aufbringens des Metallfilms (10) auf den dritten Träger (30; 45) der zweite Träger (20) von dem Metallfilm (10) entfernt wird.

15. Verfahren gemäß Anspruch 14, bei dem nach dem Entfernen des zweiten Trägers (20) eine Schutzschicht auf den Metallfilm (10) aufgebracht wird.

16. Verfahren gemäß Anspruch 15, bei dem die Schutzschicht eine Folie ist oder durch Siebdruck oder Besputtern aufgebracht wird.

17. Verfahren gemäß einem der Ansprüche 1 bis 16, bei dem der Metallfilm (10) in Dickschichttechnik als Struktur oder in Dünnschichttechnik flächig oder als Struktur auf den ersten Träger (15) aufgebracht wird.

18. Verfahren gemäß einem der Ansprüche 1 bis 17, bei dem die Strukturierung des Metallfilms (10) ein Ionenstrahlätzen einschließt.

19. Verfahren gemäß einem der Ansprüche 1 bis 18, bei dem die Strukturierung des Metallfilms (10) eine Laserbestrahlung einschließt.

20. Verfahren gemäß einem der Ansprüche 1 bis 19, bei dem der Metallfilm (10) vor, während und/oder nach der Strukturierung einer Temperaturbehandlung bei hohen Temperaturen unterzogen wird.

## Claims

1. A method of producing components including a metal film on a carrier, said method comprising the following steps:
applying a metal film (10) to a first carrier (15);
structuring the metal film (10) ;
reducing an adherence between said first carrier (15) and said metal film (10) by the following steps:
electrically conductive contacting of the metal film (10) ;
immersing the first carrier (15) with said metal film (10) in an aqueous electrolyte solution;
immersing an electrode in said aqueous electrolyte solution; and
electrolysis of the aqueous electrolyte solution by applying a voltage between said metal film (10) and said electrode;
applying a second carrier (20) to said metal film (10), which has been pretreated in this way; and
removing said second carrier (20) with said metal film (10) from said first carrier (15).

2. A method of producing components including a metal film on a carrier, said method comprising the following steps:
applying a metal film (10) to a first carrier (15);
structuring the metal film (10);
reducing an adherence between said first carrier (15) and said metal film (10) by the following steps:
electrically conductive contacting of the metal film (10) ;
immersing the first carrier (15) with said metal film (10) in an aqueous electrolyte solution;
immersing an electrode in said aqueous electrolyte solution; and
electrolysis of the aqueous electrolyte solution by applying a voltage between said metal film (10) and said electrode;
applying a second carrier (20) to said metal film (10), which has been pretreated in this way; and
removing said second carrier (20) with said metal film (10) from said first carrier (15); and
applying the metal film (10), which has been applied to said second carrier (20), to a third carrier (30; 40; 45).

3. A method according to claim 1 or 2, wherein the metal film (10) is a platinum film.

4. A method according to claim 1 or 2, wherein the metal film (10) is a rhodium film, an iridium film, a nickel film or a film consisting of alloys of these metals.

5. A method according to one of the claims 1 to 4, wherein the first carrier (15) is a ceramic substrate or a glass substrate.

6. A method according to one of the claims 1 to 5, wherein the second carrier (20) is a foil of plastic material.

7. A method according to one of the claims 1 to 5, wherein the second carrier (20) is a metal foil provided with an electrically insulating coating.

8. A method according to one of the claims 1 to 5, wherein the second carrier (20) is a ceramic carrier.

9. A method according to one of the claims 1 to 5, wherein the second carrier (20) consists of glass or passivated silicon.

10. A method according to one of the claims 3 to 9, referring back to claim 2, wherein the third carrier (30; 40) is flat and has applied thereto a metal film (10) on one side or on both sides thereof.

11. A method according to one of the claims 6 or 7, referring back to claim 2, wherein the third carrier (45) is cylindrical, the metal film (10) being applied to the circumferential surface of said cylinder.

12. A method according to one of the claims 3 to 11, referring back to claim 2, wherein the third carrier (30; 40; 45) consists of silicon.

13. A method according to one of the claims 3 to 11, referring back to claim 2, wherein the third carrier (30; 40; 45) consists of glass.

14. A method according to one of the claims 3 to 13, referring back to claim 2, wherein, after the step of applying the metal film (10) to the third carrier (30; 45), the second carrier (20) is removed from the metal film (10).

15. A method according to claim 14, wherein, after the removal of the second carrier (20), a protective layer is applied to the metal film (10).

16. A method according claim 15, wherein the protective layer is a foil or is applied by screen printing or sputtering.

17. A method according to one of the claims 1 to 16, wherein the metal film (10) is applied to the first carrier (15) by means of a thick-film technique as a structure or by means of a thin-film technique as a planar layer or as a structure.

18. A method according to one of the claims 1 to 17, wherein the structuring of the metal film (10) includes ion-beam etching.

19. A method according to one of the claims 1 to 18, wherein the structuring of the metal film (10) includes exposure to laser radiation.

20. A method according to one of the claims 1 to 19, wherein the metal film (10) is subjected to a temperature treatment at high temperatures prior to, during and/or subsequent to the structuring.

## Revendications

1. Procédé pour fabriquer des composants, qui comportent un film métallique sur un support, présentant les étapes opératoires suivantes consistant à :
◆ déposer un film métallique (10) sur un premier support (15) ;
◆ structurer le film métallique (10) ;
◆ réduire une adhérence entre le premier support (15) et le film métallique (10) au moyen des étapes suivantes consistant à :
• établir un contact électriquement conducteur avec le film métallique (10) ;
• placer le premier support (15) comportant le film métallique (10) dans une solution d'électrolyte aqueuse ;
• placer une électrode dans la solution d'électrolyte aqueuse ; et
• exécuter l'électrolyse de la solution d'électrolyte aqueuse par application d'une tension entre le film métallique (10) et l'électrode ;
◆ appliquer un deuxième support (20) sur le film métallique (10) ayant subi un tel traitement préalable ; et
◆ retirer le deuxième support (20) pourvu du film métallique (10), du premier support (15).

2. Procédé pour fabriquer des composants, qui comportent un film métallique sur un support, présentant les étapes opératoires suivantes consistant à :
◆ déposer un film métallique (10) sur un premier support (15) ;
◆ structurer le film métallique (10) ;
◆ réduire une adhérence entre le premier support (15) et le film métallique (10) au moyen des étapes suivantes consistant à :
• établir un contact électriquement conducteur avec le film métallique (10);
• placer le premier support (15) comportant le film métallique (10) dans une solution d'électrolyte aqueuse ;
• placer une électrode dans la solution d'électrolyte aqueuse ; et
• exécuter l'électrolyse de la solution d'électrolyte aqueuse par application d'une tension entre le film métallique (10) et l'électrode ;
◆ appliquer un deuxième support (20) sur le film métallique (10) ayant subi un tel traitement préalable ;
◆ retirer le deuxième support (10) pourvu du film métallique (10), du premier support (15) ; et
◆ appliquer le film métallique (10) déposé sur le deuxième support (20), sur un troisième support (30 ; 40 ; 45).

3. Procédé selon la revendication 1 ou 2, selon lequel le film métallique (10) est un film de platine.

4. Procédé selon la revendication 1 ou 2, selon lequel le film métallique (10) est un film de rhodium, un film d'iridium, un film de nickel ou un film formé d'alliages de ces métaux.

5. Procédé selon l'une des revendications 1 à 4, selon lequel le premier support (15) est un substrat céramique ou un substrat en verre.

6. Procédé selon l'une des revendications 1 à 5, selon lequel le deuxième support (20) est une feuille de matière plastique.

7. Procédé selon l'une des revendications 1 à 5, selon lequel le deuxième support (20) est une feuille métallique, qui est recouverte d'un revêtement électriquement isolant.

8. Procédé selon l'une des revendications 1 à 5, selon lequel le deuxième support (20) est un support céramique.

9. Procédé selon l'une des revendications 1 à 5, selon lequel le deuxième support (20) est constitué par du verre ou du silicium passivé.

10. Procédé selon l'une des revendications 3 à 9, en référence à la revendication 2, selon lequel le troisième support (30 ; 40) est plat et un film métallique (10) est déposé sur une face ou sur les deux faces de ce support (30 ; 40).

11. Procédé selon l'une des revendications 6 à 7, en référence à la revendication 2, selon lequel le troisième support (45) a une forme cylindrique, le film métallique (10) étant déposé sur la surface enveloppe du cylindre.

12. Procédé selon l'une des revendications 3 à 11, en référence à la Figure 2, selon lequel le troisième support (30 ; 40 ; 45) est formé de silicium.

13. Procédé selon l'une des revendications 3 à 11 en référence à la revendication 2, selon lequel le troisième support (30 ; 40 ; 45) est formé de verre.

14. Procédé selon l'une des revendications 3 à 13, en référence à la revendication 2, selon lequel après l'étape de dépôt du film métallique (10) sur le troisième support (30 ; 40 ; 45), on retire le deuxième support (20) du film métallique (10).

15. Procédé selon la revendication 14, selon lequel après le retrait du deuxième support (20), on dépose une couche de protection sur le film métallique (10).

16. Procédé selon la revendication 15, selon lequel la couche de protection est une feuille ou est déposée par sérigraphie ou par dépôt par pulvérisation.

17. Procédé selon l'une des revendications 1 à 16, selon lequel le film métallique (10) est déposé selon la technique à couches épaisses en tant que structure ou selon la technique des couches minces à plat ou en tant que structure sur le premier support (15).

18. Procédé selon l'une des revendications 1 à 17, selon lequel la structuration du film métallique (10) inclut une attaque par faisceau d'ions.

19. Procédé selon l'une des revendications 1 à 18, selon lequel la structuration du film métallique (10) inclut une irradiation par laser.

20. Procédé selon l'une des revendications 1 à 19, selon lequel le film métallique (10) est soumis à un traitement thermique à des températures élevées avant, pendant et/ou après la structuration.
